# FASCICULE DE BREVET EUROPEEN

(11) **EP 1 167 073 B1**
(45) Date de publication et mention de la délivrance du brevet: **14.07.2004**
(21) Numéro de dépôt: 01440190.5
(22) Date de dépôt: 26.06.2001
(51) Int. Cl.: B44C 5/04, B44F 9/10

(54) **Procédé de réalisation d'une imitation de facade métallique d'appareil électroménager.**
Verfahren zur Herstellung eines Metallimitationdeckblattes für elektrische Haushaltsgeräte
Process for manufacturing an imitation of a metallic front panel for electric houshold machines

(30) Priorité: 26.06.2000 FR 0008171
(43) Date de publication de la demande: 02.01.2002
(73) Titulaire: Schott VTF (Société à Responsabilité Limitée), 57870 Troisfontaines (FR); BSH Bosch und Siemens Hausgeräte GmbH, 81739 München (DE)
(72) Inventeur: Epp, Bertrand, 57820 Dannelbourg (FR); Busalt, Gerhard, 83301 Traunreut (DE)
(74) Mandataire: Nuss, Pierre

(56) Documents cités:
- EP-A- 0 540 335
- WO-A-00/20348
- GB-A- 2 116 879

## Description

La présente invention concerne le domaine des équipements électroménagers, en particulier des cuisinières, des fours, des lave-vaisselle et autres munis sur leur façade d'un ou de plusieurs panneaux verriers en verre trempé formant bandeaux de commande ou éléments de portes ou plans de cuisson, et a pour objet un procédé de réalisation d'une imitation de façade métallique d'appareil électroménager.

Les éléments verriers utilisés à ce jour pour la réalisation de panneaux verriers de façade sont généralement des pièces d'esthétique, qui sont souvent associées à des éléments en acier inoxydable brossé ou en aluminium microbillé et qui ont pour but de conférer un caractère esthétique à l'appareil ainsi équipé. L'élément en acier inoxydable ou en aluminium est généralement pourvu en face avant d'une marque d'appareil imprimée en peinture à base époxy et déposée par sérigraphie, de sorte que cette impression est exposée aux abrasions de toute nature.

Ce mode de réalisation des bandeaux ou éléments de portes nécessite des outils fort coûteux de poinçonnage des éléments métalliques pour effectuer le découpage de fenêtres permettant le passage de la lumière du témoin lumineux attestant, par exemple, du fonctionnement d'un appareil. De plus, les bandeaux de commande sont percés de trous, également réalisés par poinçonnage, pour permettre le passage de boutons poussoirs ou de boutons de commande.

En outre, les éléments de porte réalisés en acier inoxydable ou en aluminium peuvent être percés de trous de fixation pour des poignées ou autres. Ces fenêtres et trous, qui sont des découpes dans le métal, sont obtenus au moyen d'un outil de découpe monté sur presse, de sorte qu'un outillage de poinçonnage et une opération de découpe spécifique à chaque configuration de bandeau, sont nécessaires. De plus, les éléments en verre trempé sont percés avant trempe.

Le montage d'un élément verrier sur un élément en acier inoxydable ou en aluminium doit être effectué de manière précise, afin d'obtenir une bonne superposition des trous des deux éléments verre et métal et de permettre le passage des boutons de commande ou analogue. Ces éléments en verre et en métal sont, le plus souvent, collés l'un à l'autre par l'intermédiaire d'un adhésif auto-collant biface. Un tel adhésif présente, toutefois, d'importants problèmes de positionnement. Il est également possible d'utiliser un produit adhésif tel que celui décrit dans les documents EP-A-0 802 375 et EP-A-0 826 489.

Cependant, les procédés connus de réalisation d'ensemble verre / métal présentent, outre l'inconvénient d'un problème technique lié à la nécessité de découper le verre et le métal séparément, l'inconvénient que ledit métal peut être facilement détérioré et difficilement nettoyé. Cet inconvénient est principalement dû au fait que ledit métal, à savoir acier inoxydable ou aluminium, est en face avant du verre et est très sensible aux chocs et aux rayures.

Il est également connu, par GB-A-2 153 744, un procédé de réalisation d'un panneau composite par collage d'une feuille transparente ou transmissible sur un support décoré. Ce procédé ne permet, toutefois, pas d'obtenir un décor résistant à la rayure et aux chocs.

Enfin, US-A-5 049 433 décrit un panneau de verre de sécurité constitué par une couche principale de verre sur laquelle est collée une feuille de matière synthétique destinée à en assurer la cohésion en cas de rupture de la couche de verre, par exemple suite à un impact ou autre.

La présente invention a pour but de pallier ces inconvénients en proposant un procédé de réalisation d'une imitation de façade métallique d'appareil électroménager, de tous genres et de toutes nuances possibles, tel qu'un bandeau de commande ou un élément de porte, permettant l'obtention d'un panneau esthétique, rigide, résistant aux chocs et peu sensible aux rayures.

A cet effet, le procédé de réalisation d'une imitation de façade métallique d'appareil électroménager est caractérisé en ce qu'il consiste à déposer, en face avant d'une plaque de verre, à tous les endroits souhaités, au moins une couche décorative imitant le métal à contretyper et constituée par au moins une teinte pouvant être émaillée, puis à émailler et à tremper l'ensemble.

L'invention sera mieux comprise, grâce à la description ci-après, qui se rapporte à un mode de réalisation préféré, donné à titre d'exemple non limitatif, et expliqué avec référence au dessin schématique annexé, dans lequel :
la figure 1 est une vue de face d'un élément verrier conforme à l'invention, et
la figure 2 et une vue agrandie en coupe suivant A-A de la figure 1.

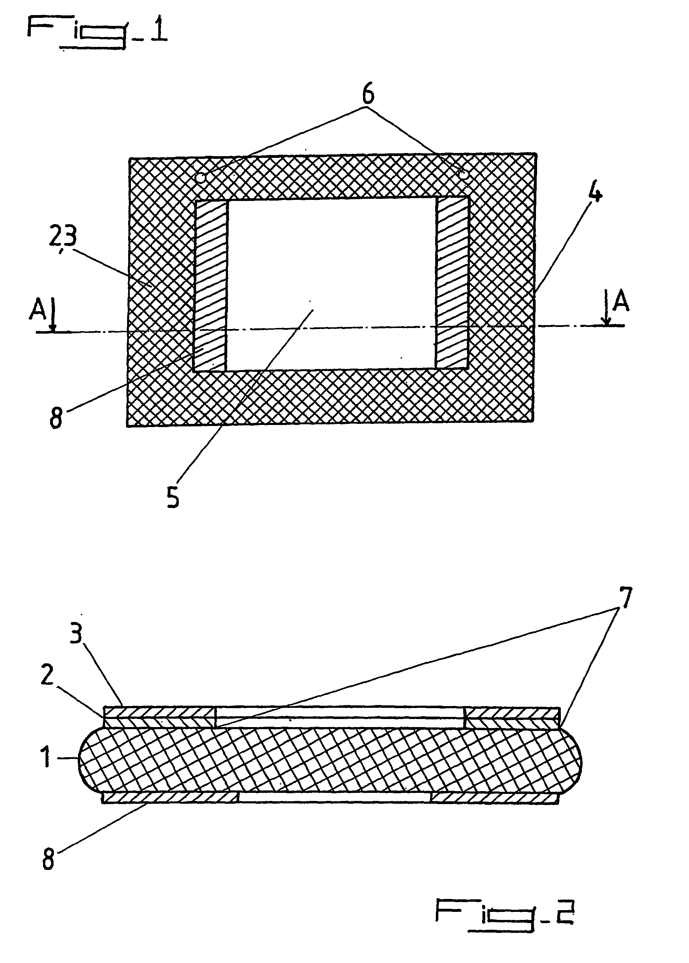

Les figures 1 et 2 du dessin annexé représentent, à titre d'exemple non limitatif un élément verrier de façade d'appareil électroménager.

Conformément à l'invention, un tel élément verrier de façade est réalisé selon un procédé qui consiste à déposer, en face avant d'une plaque de verre 1, à tous les endroits souhaités, au moins une couche décorative 2 imitant le métal à contretyper et constituée par au moins une teinte pouvant être émaillée, puis à émailler et à tremper l'ensemble. Ainsi, le décor obtenu présente une esthétique et une résistance aux chocs et aux rayures ou autres agressions extérieures non réparables, ainsi qu'une aptitude au nettoyage des traces de doigts laissées par l'utilisateur.

Selon une caractéristique de l'invention, deux couches décoratives 2 et 3 sont appliquées en face avant de la plaque de verre 1. De préférence, l'une des couches décoratives 2 est destinée à donner au panneau verrier la teinte du métal recherché et l'autre couche décorative 3 est destinée à conférer à l'ensemble une surface structurée imitant l'aspect du métal. Un tel mode de réalisation permet l'obtention d'excellents résultats, en particulier pour une imitation d'une couche d'aluminium, dont l'apparence de la surface correspond à celle d'une surface successivement microbillée et anodisée.

Conformément à une autre caractéristique de l'invention, le dépôt de la ou des couches décoratives 2 et 3 est préférentiellement réalisé par sérigraphie avant la trempe. Cette dernière confère au panneau verrier une résistance mécanique et sa qualification en tant que verre de sécurité et permet d'émailler les couches décoratives 2 et 3.

Ce procédé de réalisation de panneaux verriers conformes à l'invention permet d'obtenir une réduction substantielle des coûts de fabrication, du fait qu'il permet de s'affranchir des coûts correspondants à la fabrication et à la pause d'un élément métallique massif comme il est de pratique usuelle dans la profession. De plus, ces dépôts peuvent être réalisés avec un outillage simple courant dans le domaine de la sérigraphie du verre.

Selon une autre caractéristique de l'invention, il est également possible de réaliser le dépôt de la ou des couches 2 et 3 au moyen d'un rouleau ou d'un pinceau ou encore par projection.

Le dépôt des couches 2 et 3 par sérigraphie ou autre, permet un positionnement respectif des teintes utilisées parfaitement précis, les écrans utilisés à cet effet étant facilement réglable en position et pouvant présenter des découpes parfaitement adaptées aux besoins, à savoir, par exemple, à des contours 4, à une ou plusieurs réserves en verre clair 5, à des perçages 6 ou autres découpes pouvant être réalisées ultérieurement. En outre, ce dépôt permet une décoration parfaitement précise de manière fiable et répétitive.

A titre d'exemple, les couches décoratives 2 et 3 pour la réalisation d'une imitation d'aluminium microbillé et anodisé sont avantageusement constituées par des teintes pouvant être émaillées, telles que celles connues respectivement sous les dénominations commerciales DV953152R / H908 et DV952952R / H 908 de la société PEMCO EMAIL. Ces teintes sont avantageusement compatibles avec la dilatation du verre en particulier sur un appareil électroménager et notamment sur un appareil de cuisson.

Selon une variante de réalisation de l'invention, les teintes constitutives des couches décoratives 2 et 3 peuvent être mélangées préalablement à l'application sur la face avant de la plaque de verre 1 et y sont déposées en une seule opération. Un tel mode de réalisation permet un gain de temps appréciable dans le processus de fabrication.

Les épaisseurs des couches décoratives 2 et 3 peuvent être réalisées à une valeur tellement faible qu'elles permettent d'éviter la formation d'interstices au niveau des joints 7, tels que ceux habituels dans des assemblages en tôle massive.

En effet, dans un tel cas d'assemblage de tôle massive, du fait de l'épaisseur et de l'usinage de ladite tôle, il se produit la formation d'interstices. La présente invention procure l'avantage de faciliter l'entretien des panneaux verriers par l'obtention d'une surface sans obstacle.

La mise en oeuvre du procédé conforme à l'invention permet, en outre, par exemple dans le cas d'utilisation d'un panneau verrier monté sur un appareil électroménager de cuisson, tel qu'un four et décoré par sérigraphie des couches décoratives 2 et 3, permet un fonctionnement avec une température de surface plus élevée de sa façade que celle normalement autorisée sur des appareils de cuisson analogues pourvus d'un revêtement de métal massif collé sur le verre et pouvant être en contact avec l'utilisateur.

Conformément à une autre caractéristique de l'invention, et comme les montrent les figures 2 et 3 du dessin annexé, la plaque de verre 1 peut être pourvue, outre des couches décoratives 2 et 3 sur sa face avant, d'une couche décorative 8 sur sa face arrière. De préférence, la couche décorative 8 est réalisée en une encre à base époxy déposée par sérigraphie.

Il est également possible, selon une variante de réalisation de l'invention, de réaliser la couche décorative 8 sous forme d'un film décoratif ou d'une tôle.

La décoration du panneau verrier sur ses deux faces confère à l'ensemble obtenu une impression de relief qui accentue l'imitation d'un panneau réalisé par collage d'une tôle en face avant de ce dernier et par sérigraphie d'un décor sur sa face arrière. De plus, une impression sur les deux faces de la plaque de verre 1 est d'un coût moindre qu'une solution par collage d'un élément métallique massif, conformément à l'état actuel de la technique.

Un panneau verrier réalisé conformément à la présente invention peut être utilisé sur des fours à nettoyage par pyrolyse sans encourir un risque de détérioration du décor, contrairement au panneau existant actuellement, réalisés par collage en face avant d'une tôle en aluminium anodisé ou en acier inoxydable, qui ne résiste pas, dans toutes les configurations, aux températures actuelles de fonctionnement de tels appareils.

Le procédé conforme à l'invention permet donc la réalisation d'un décor avec imitation d'un élément métallique rapporté, ce avec des coûts de fabrication nettement moins élevés que ceux actuels correspondants à la mise en oeuvre de tels éléments métalliques.

Grâce à l'invention, il est possible de réaliser, à coût réduit et en disposant de grandes facilités d'adaptation esthétique, des panneaux verriers avec imitation de façades métalliques de tous genres et de toutes nuances possibles, pour l'obtention de bandeaux de commande, d'éléments de portes ou autres, notamment pour les appareils électroménagers.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Procédé de réalisation d'une imitation de façade métallique d'appareil électroménager **caractérisé en ce qu'**il consiste à déposer, en face avant d'une plaque de verre (1), à tous les endroits souhaités, au moins une couche décorative (2) imitant le métal à contretyper et constituée par au moins une teinte pouvant être émaillée, puis à émailler et à tremper l'ensemble.

2. Procédé, suivant la revendication 1, **caractérisé en ce que** deux couches décoratives (2 et 3) sont appliquées en face avant de la plaque de verre (1).

3. Procédé, suivant l'une quelconque des revendications 1 et 2, **caractérisé en ce que** le dépôt de la ou des couches décoratives (2 et 3) est réalisé par sérigraphie avant la trempe.

4. Procédé, suivant l'une quelconque des revendications 1 et 2, **caractérisé en ce que** le dépôt de la ou des couches décoratives (2 et 3) est réalisé au moyen d'un rouleau ou d'un pinceau.

5. Procédé, suivant l'une quelconque des revendications 1 et 2, **caractérisé en ce que** le dépôt de la ou des couches décoratives (2 et 3) est réalisé par projection.

6. Procédé, suivant l'une quelconque des revendications 1 et 2, **caractérisé en ce que** les couches décoratives (2 et 3) pour la réalisation d'une imitation d'aluminium microbillé et anodisé sont constituées par des teintes pouvant être émaillées, telles que celles connues respectivement sous les dénominations commerciales DV953152R / H908 et DV952952R / H 908 de la société PEMCO EMAIL.

7. Procédé, suivant l'une quelconque des revendications 1 et 2, **caractérisé en ce que** les teintes constitutives des couches décoratives (2 et 3) sont mélangées préalablement à l'application sur la face avant de la plaque de verre (1) et y sont déposées en une seule opération.

8. Procédé, suivant l'une quelconque des revendications 1 à 7, **caractérisé en ce que** la plaque de verre (1) est pourvue, outre des couches décoratives (2 et 3) sur sa face avant, d'une couche décorative (8) sur sa face arrière.

9. Procédé, suivant la revendication 8, **caractérisé en ce que** la couche décorative (8) est réalisée en une encre à base époxy déposée par sérigraphie.

10. Procédé, suivant la revendication 8, **caractérisé en ce que** la couche décorative (8) est réalisée sous forme d'un film décoratif.

11. Procédé, suivant la revendication 8, **caractérisé en ce que** la couche décorative (8) est réalisée sous forme d'une tôle.

## Patentansprüche

1. Verfahren zur Herstellung einer Imitation einer Metallfront für elektrische Haushaltsgeräte, **dadurch gekennzeichnet, daß** es darin besteht, daß an der Vorderseite einer Glasplatte (1) an allen gewünschten Stellen mindestens eine Verzierungsschicht (2) aufgebracht wird, welche das zu kopierende Metall nachbildet und dadurch mindestens eine Tönung gebildet wird, welche emailliert sein kann, dann der Aufbau emailliert und gehärtet wird.

2. Verfahren nach Anspruch 1, **dadurch gekennzeichnet, daß** zwei Verzierungsschichten (2 und 3) auf die Vorderseite der Glasplatte (1) aufgebracht werden.

3. Verfahren nach einem der Ansprüche 1 und 2, **dadurch gekennzeichnet, daß** die Aufbringung der Verzierungsschicht(en) (2 und 3) durch Serigraphie vor dem Härten erfolgt.

4. Verfahren nach einem der Ansprüche 1 und 2, **dadurch gekennzeichnet, daß** die Aufbringung der verzierungsschicht(en) (2 und 3) mittels einer Rolle oder eines Pinsels erfolgt.

5. Verfahren nach einem der Ansprüche 1 und 2, **dadurch gekennzeichnet, daß** die Aufbringung der Verzierungsschicht(en) (2 und 3) mittels Projektion erfolgt.

6. Verfahren nach einem der Ansprüche 1 und 2, **dadurch gekennzeichnet, daß** die Verzierungsschichten (2 und 3) zur Herstellung einer Imitation von kugelgestrahltemförmigem und eloxiertem Aluminium aus Tönungen besteht, die emailliert sein können, wie beispielsweise die unter den Handelsbezeichnungen DV953152R/H908 und DV952952R/H908 der Firma PEMCO EMAIL bekannten.

7. Verfahren nach einem der Ansprüche 1 und 2, **dadurch gekennzeichnet, daß** die Farbbestandteile der verzierungsschichten (2 und 3) zur Fertigstellung gemischt werden, bevor sie auf die Vorderseite der Glasscheibe (1) aufgetragen zu werden, und dort in einem einzigen Arbeitsschritt aufgebracht werden.

8. Verfahren nach einem der vorhergehenden Ansprüche 1 bis 7, **dadurch gekennzeichnet, daß** die Glasscheibe (1) mit einer Verzierungsschicht (8) auf ihrer Hinterseite versehen ist, die anders ist als die Verzierungsschichten (2 und 3) auf ihrer Vorderseite.

9. Verfahren nach Anspruch 8, **dadurch gekennzeichnet, daß** die Verzierungsschicht (8) aus einer Farbe auf Epoxidbasis hergestellt wird, welche durch Serigraphie aufgetragen wird.

10. Verfahren nach Anspruch 8, **dadurch gekennzeichnet, daß** die Verzierungsschicht (8) in der Form eines Verzierungsfilmes ausgebildet wird.

11. Verfahren nach Anspruch 8, **dadurch gekennzeichnet, daß** die Verzierungsschicht (8) in der Form eines Bleches ausgebildet wird.

## Claims

1. A method for forming an imitation metal façade on an electric domestic appliance **characterised in that** it comprises applying to the front surface of a glass plate (1), at any desired spot, at least one decorative layer (2) imitating the metal to be portrayed and comprised of at least one colour which can be enamelled, and then in enamelling and tempering the entire assembly.

2. A method according to claim 1 **characterised in that** two decorative layers (2 and 3) are applied to the front of the glass plate (1).

3. A method according to either of claims 1 and 2 **characterised in that** the application of the or each decorative layer (2, 3) is carried out by silk screen printing before tempering.

4. A method according to either of claims 1 and 2 **characterised in that** the application of the or each decorative layer (2, 3) is carried out by means of a roller or brush.

5. A method according to either of claims 1 and 2 **characterised in that** the application of the or each decorative layer (2, 3) is carried out by projection.

6. A method according to either of claims 1 and 2 **characterised in that** the decorative layers (2, 3) for forming an imitation of anodised microbeaded aluminium are comprised of colours which can be enamelled, such as those known respectively under the commercial names DV953152 R/H908 and DV952952R/ H908 from the company PEMCO EMAIL.

7. A method according to any of claims 1 and 2 **characterised in that** the colours making up the decorative layers (2 and 3) are mixed in advance before being applied to the front surface of the glass plate (1) and are applied thereto in a single operation.

8. A method according to any of claims 1 to 7 **characterised in that** the glass plate (1) is provided in addition to the decorative layers (2, 3) on its front surface, with a decorative layer (8) on its rear surface.

9. A method according to claim 8 **characterised in that** the decorative layer (8) is formed by an epoxy base ink applied by silk screen printing..

10. A method according to claim 8 **characterised in that** the decorative layer (8) is produced in the form of a decorative film.

11. A method according to claim 8 **characterised in that** the decorative layer (8) is produced in the form of a sheet.
